# EUROPÄISCHE PATENTSCHRIFT

(11) **EP 3 256 791 B1**
(45) Veröffentlichungstag und Bekanntmachung des Hinweises auf die Patenterteilung: **25.04.2018**
(21) Anmeldenummer: 16709679.1
(22) Anmeldetag: 11.02.2016
(51) Int. Cl.: F24F 6/14, B60H 3/02, F24F 13/065

(54) **WEITWURFDÜSE ZUR LUFTEINTRAGUNG**
LONG-RANGE NOZZLE
BUS À GRANDE PORTÉE

(30) Priorität: 13.02.2015 AT 501122015
(43) Veröffentlichungstag der Anmeldung: 20.12.2017
(73) Patentinhaber: Merlin Technology GmbH, A-4911 Tumeltsham / Ried im Innkreis (AT)
(72) Erfinder: REISINGER, Johann, 4925 Pramet (AT)
(74) Vertreter: Patentanwaltskanzlei Hübscher
(86) Internationale Anmeldenummer: PCT/AT2016/050026
(87) Internationale Veröffentlichungsnummer: WO 2016/127195

(56) Entgegenhaltungen:
- DE-A1- 3 343 731
- US-A1- 2009 072 042

## Beschreibung

### Technisches Gebiet

Die Erfindung bezieht sich auf eine Weitwurfdüse zur Lufteintragung in einen Raum mit einem in einer Düsenöffnung mündenden Düsenkörper.

### Stand der Technik

Weitwurfdüsen dienen zum Einbringen von Kalt- oder Warmluft in Räume mit einer geforderten Eindringtiefe des ausgeblasenen Luftstroms, um insbesondere bestimmte Raumbereiche mit der eingebrachten Luft zu versorgen. Der Ausrichtung der Weitwurfdüsen kommt daher eine erhebliche Bedeutung zu, was zu schwenkverstellbaren Düsenkörpern geführt hat. Zu diesem Zweck ist es bekannt (EP 0 826 932 A2), den im Wesentlichen konischen Düsenkörper mit einer kalottenförmigen Einhausung zu versehen, die in einem rohrförmigen Anschlussstutzen einerseits um die Achse des Anschlussstutzens und anderseits um eine dazu senkrechte Achse schwenkverstellbar gelagert ist, sodass die über die kalottenförmige Einhausung vorstehende Düsenmündung beliebig ausgerichtet werden kann. Soll die in den Raum gerichtet eingeblasene Luft einen vorgegebenen Feuchtigkeitsgehalt aufweisen, so muss die Luft stromaufwärts der Weitwurfdüse entsprechend konditioniert werden, was nicht nur aufwendig ist, sondern meist eine nachträgliche Ausrüstung mit einer Befeuchtungsvorrichtung ausschließt.

Zur Kühlung von Personen ist es bekannt (WO 95/35471 A1), auf den Aufenthaltsbereich der zu kühlenden Personen eine Luftströmung zu richten, in die über Düsen Wasser eingesprüht wird, um einerseits der Luftströmung Verdampfungswärme für die eingesprühten Wassertropfen zu entziehen und anderseits den Aufenthaltsbereich der zu kühlenden Personen mit einem Feuchtigkeitsnebel zu versorgen. Die hierfür eingesetzten Einrichtungen, bei denen die Düsen entlang der Austrittsöffnung eines Strömungskanals für die angesaugte, zu kühlende Luft angeordnet sind, sind daher ungeeignet, eine vorgegebenen Luftfeuchtigkeit einzustellen. Ähnliches gilt für andere bekannte Kühleinrichtungen (US 2009/0072042 A1), bei denen eine Düse zum Einsprühen von Wasser koaxial zur Ausströmöffnung des Strömungskanals für die zu kühlende Luftströmung vorgesehen ist. Die US 2009/0072042 A1 offenbart dabei eine Weitwurfdüse mit den Merkmalen des Oberbegriffs von Anspruch 1. Schließlich ist es zur großflächigen Belüftung von Ställen bekannt (DE 33 43 731 A1), an ein in der Stalldecke vorgesehenes Einblasrohr einen Kranz von sich radial nach außen öffnenden Düsenkanälen für die eingeblasene Luft anzuschließen, wobei die Möglichkeit besteht, in die radial austretenden Luftströmungen Wasser einzudüsen, um die Luftfeuchtigkeit anzuheben. Eine Aufteilung der Einblasluft in radiale Luftströmungen steht allerdings einer Weitwurfwirkung entgegen.

### Darstellung der Erfindung

Der Erfindung liegt somit die Aufgabe zugrunde, Maßnahmen vorzusehen, mit deren Hilfe in einfacher Weise eine Befeuchtung der über Weitwurfdüsen ausgebrachten Luft möglich wird, ohne ein Ausscheiden nicht verdampfter Flüssigkeitströpfchen aus der in den Raum eingeblasenen Luftströmung befürchten zu müssen. Ausgehend von einer Weitwurfdüse der eingangs geschilderten Art löst die Erfindung die gestellte Aufgabe durch einen die Düsenöffnung koaxial umgebenden Kranz von Zerstäuberdüsen, die an einen mit Druckflüssigkeit beaufschlagbaren Ringkanal angeschlossen sind.

Durch die Zerstäuberdüsen kann dem aus der Weitwurfdüse ausgeblasenen Luftstrahl ein Flüssigkeitsnebel aufgegeben werden, der sich mit dem Förderluftstrom vermischt und verdampft. Die Injektorwirkung einerseits der Weitwurfdüse und anderseits des Kranzes an Zerstäuberdüsen bedingt in diesem Zusammenhang das Ansaugen eines den sich ringförmig aus den Zerstäuberdüsen ausbreitenden Flüssigkeitsnebel umhüllenden Luftmantels, der das Ausscheiden von Flüssigkeitströpfchen aus der in den Raum eingeblasenen Luftströmung wirksam verhindert, bevor die Flüssigkeitströpfchen verdampft sind. Die im Mischungsbereich auftretenden Turbulenzen unterstützen einerseits eine rasche Verteilung der Flüssigkeitströpfchen innerhalb der ausgeblasenen Luftströmung und erhöhen anderseits die Verweilzeit der Flüssigkeitströpfchen in der Luftströmung, sodass bereits in einem vergleichsweise kurzen Abstand von der Weitwurfdüse eine weitgehende Verdampfung des über die kranzförmig angeordneten Zerstäuberdüsen eingebrachten Flüssigkeitsnebels festgestellt werden kann. Die Beaufschlagung der Zerstäuberdüsen mit unter einem vorgegebenen Druck stehender Flüssigkeit über einen Ringkanal ist konstruktiv einfach und erlaubt über eine Drucksteuerung der zu verdüsenden Flüssigkeit eine gute Dosierung der zuzuführenden Flüssigkeitsmenge in Abhängigkeit von der Differenz der Sollfeuchtigkeit und der Feuchtigkeit der aus der Weitwurfdüse austretenden Luft. Die Anzahl der Zerstäuberdüsen im Düsenkranz spielt dabei eine untergeordnete Rolle, obwohl mit mehreren Zerstäuberdüsen eine raschere Verteilung der Feuchtigkeit über den Umfang des Luftstrahls als beispielsweise mit zwei Zerstäuberdüsen erreicht wird. Der in den Luftstrahl der Weitwurfdüse eingebrachte Flüssigkeitsnebel kann auch zur Kühlung der eingeblasenen Luftströmung herangezogen werden, weil dieser Flüssigkeitsnebel zu seinem Verdampfen der Luft die Verdampfungswärme entzieht.

Besonders einfache Konstruktionsverhältnisse ergeben sich, wenn der Düsenköper eine kalottenförmige Einhausung aufweist, die den Kranz von Zerstäuberdüsen trägt, weil in diesem Fall am Düsenkörper selbst keine konstruktiven Änderungen vorgenommen werden müssen und die kalottenförmige Einhausung ausreichend Platz zu Aufnahme des Düsenkranzes und des Ringkanals zur Beaufschlagung der Zerstäuberdüsen bietet.

Um die Strömungsbedingungen für den durch Injektorwirkung angesaugten, den Düsenkranz umhüllenden Luftmantel zu verbessern, kann auf der der Düsenöffnung abgewandten Seite der Zerstäuberdüsen eine ringförmige Leitwand vorgesehen sein, die die Anströmbedingungen für diesen Luftmantel weitgehend vorgibt. Sind die Zerstäuberdüsen auf einer kalottenförmigen Einhausung vorgesehen, so kann ein Teil dieser Einhausung vorteilhaft als Leitwand genützt werden.

Bildet der Ringkanal mit den Zerstäuberdüsen und gegebenenfalls mit der Leitwand eine auf die kalottenförmige Einhausung aufsetzbare Baueinheit, so können herkömmliche Weitwurfdüsen mit einer kalottenförmigen Einhausung in einfacher Weise mit einer erfindungsgemäßen Einrichtung zur Luftbefeuchtung über einen Düsenkranz ausgerüstet werden, weil die Baueinheit aus dem Ringkanal mit den Zerstäuberdüsen und gegebenenfalls mit der Leitwand lediglich auf der Einhausung zu befestigen ist.

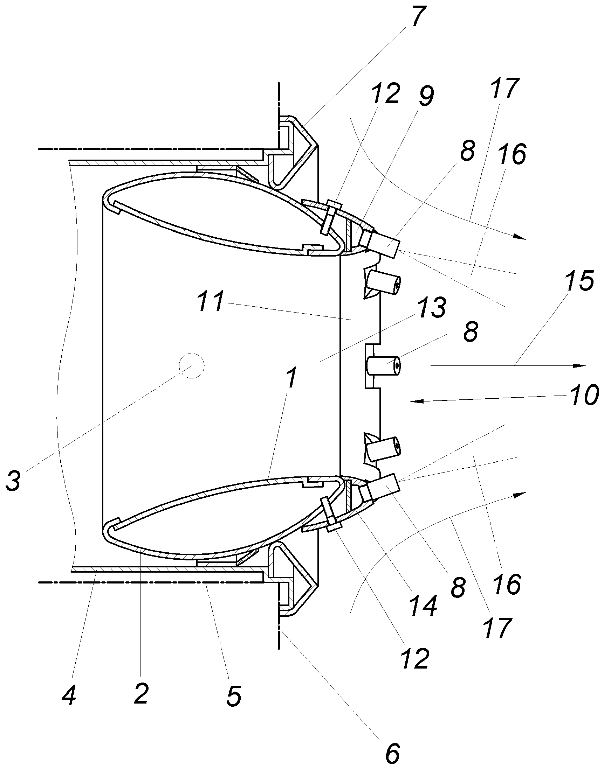

### Kurze Beschreibung der Zeichnung

In der Zeichnung ist der Erfindungsgegenstand beispielsweise dargestellt und zwar wird eine erfindungsgemäße Weitwurfdüse in einem schematischen Längsschnitt gezeigt.

Die erfindungsgemäße Weitwurfdüse weist gemäß dem dargestellten Ausführungsbeispiel einen herkömmlichen Düsenkörper 1 mit einer kalottenförmigen Einhausung 2 auf, die über eine Schwenkachse 3 in einem Rohrstutzen 4 schwenkbar gelagert ist. Der Rohrstutzen 4, über den die Weitwurfdüse an eine Luftleitung angeschlossen wird, ist in eine strichpunktiert angedeutete Ausnehmung 5 einer einen zu belüftenden Raum begrenzenden Wand oder Decke 6 eingesetzt. Der Rohrstutzen 4 mit der im Rohrstutzen 4 gelagerten kalottenförmigen Einhausung 2 wird durch einen Abschlussring 7 abgedeckt, der die Wand bzw. Decke 6 übergreift.

Zum Unterschied zu herkömmlichen Weitwurfdüsen dieser Art ist die erfindungsgemäße Weitwurfdüse mit einem zum Düsenkörper 1 koaxialen Kranz von Zerstäuberdüsen 8 versehen, die an einen Ringkanal 9 angeschlossen sind, der mit einer Druckflüssigkeit zur Befeuchtung der in den Raum ausgeblasenen Luft beaufschlagt werden kann. Die Zerstäuberdüsen 8 mit dem Ringkanal 9 bilden eine Baueinheit 10, die einen auf die kalottenförmige Einhausung 2 aufsetzbaren Ring 11 bildet. Dieser Ring 11 wird mit Hilfe von Schrauben 12 an der Einhausung 2 festgeklemmt und bildet strömungstechnisch eine Verlängerung der Düsenöffnung 13 des Düsenkörpers 1. Auf der der Düsenöffnung 13 abgewandten Seite der Zerstäuberdüsen 8 bildet der Ring 11 der Baueinheit 10 eine Leitwand 14 aus.

Um die durch die Weitwurfdüse in den Raum ausgeblasene Luftströmung 15 zu befeuchten, werden die Zerstäuberdüsen 8 mit Druckflüssigkeit beaufschlagt, sodass dieser Luftströmung 15 ein sie umschließender Flüssigkeitsnebel 16 aus den Zerstäuberdüsen 8 zugeführt wird, der sich mit der aus der Weitwurfdüse austretenden Luftströmung 15 innig vermischt und während seiner Förderung mit dieser Luftströmung 15 verdampft. Aufgrund der Injektorwirkung einerseits der aus der Weitwurfdüse ausgeblasenen Luftströmung 15 und anderseits des aus den Zerstäuberdüsen 8 ausgestoßenen Flüssigkeitsnebels 16 wird zusätzlich Raumluft 17 angesaugt, die die Luftströmung 15 und den Flüssigkeitsnebel 16 in Form eines Luftmantels umschließt und verhindert, dass Flüssigkeitströpfchen des Flüssigkeitsnebels aus der Luftströmung 15 ausgeschieden werden, bevor dieser Flüssigkeitsnebel verdampft ist.

## Patentansprüche

1. Weitwurfdüse zur Lufteintragung in einen Raum mit einem in einer Düsenöffnung (13) mündenden Düsenkörper (1), **gekennzeichnet durch** einen die Düsenöffnung (13) koaxial umgebenden Kranz von Zerstäuberdüsen (8), die an einen mit Druckflüssigkeit beaufschlagbaren Ringkanal (9) angeschlossen sind.

2. Weitwurfdüse nach Anspruch 1, **dadurch gekennzeichnet, dass** der Düsenköper (1) eine kalottenförmige Einhausung (2) aufweist, die den Kranz von Zerstäuberdüsen (8) trägt.

3. Weitwurfdüse nach Anspruch 1 oder 2, **dadurch gekennzeichnet, dass** auf der der Düsenöffnung (13) abgewandten Seite der Zerstäuberdüsen (8) eine ringförmige Leitwand (14) vorgesehen ist.

4. Weitwurfdüse nach einem der Ansprüche 1 bis 3, **dadurch gekennzeichnet, dass** der Ringkanal (9) mit den Zerstäuberdüsen (8) und gegebenenfalls mit der Leitwand (14) eine auf die kalottenförmige Einhausung (2) aufsetzbare Baueinheit (10) bildet.

## Claims

1. Long-range nozzle for introducing air into a room comprising a nozzle body (1) issuing in a nozzle opening (13), **characterised by** a crown of atomiser nozzles (8) which coaxially surround the nozzle opening (13) and are connected to an annular channel (9) to which pressurised liquid can be applied.

2. Long-range nozzle as claimed in claim 1, **characterised in that** the nozzle body (1) comprises a dome-shaped housing (2) which bears the crown of atomiser nozzles (8).

3. Long-range nozzle as claimed in claim 1 or 2, **characterised in that** an annular guiding wall (14) is provided on the side of the atomiser nozzles (8) facing away from the nozzle opening (13).

4. Long-range nozzle as claimed in any one of claims 1 to 3, **characterised in that** the annular channel (9) with the atomizer nozzles (8) and optionally with the guiding wall (14) forms a structural unit (10) which can be placed onto the dome-shaped housing (2).

## Revendications

1. Buse à jet longue portée pour l'introduction d'air dans un espace, comprenant un corps de buse (1) débouchant sur une ouverture de buse (13) **caractérisée par** une couronne, entourant coaxialement l'ouverture de buse (13), de buses d'atomisation (8) qui sont raccordées à un canal annulaire (9) pouvant être soumis à un fluide sous pression.

2. Buse à jet longue portée selon la revendication 1, **caractérisée en ce que** le corps de buse (1) comporte une enceinte (2) en forme de calotte qui porte la couronne de buses d'atomisation (8).

3. Buse à jet longue portée selon la revendication 1 ou 2, **caractérisée en ce que** sur le côté, opposé à l'ouverture de buse (13), des buses d'atomisation (8), il est prévu une paroi de guidage (14) annulaire.

4. Buse à jet longue portée selon l'une des revendications 1 à 3, **caractérisée en ce que** le canal annulaire (9) forme avec les buses d'atomisation (8) et le cas échéant, avec la paroi de guidage (14), une unité modulaire (10) pouvant être posée sur l'enceinte (2) en forme de calotte .
